# EUROPEAN PATENT APPLICATION

(11) **EP 0 522 545 A1**
(43) Date of publication of application: **13.01.1993**
(21) Application number: 92111623.2
(22) Date of filing: 09.07.1992
(51) Int. Cl.: B60J 10/08

(54) **Weather stripping, particularly for motor vehicle doors**

(30) Priority: 12.07.1991 IT MI911929
(71) Applicant: PIRELLI PRODOTTI DIVERSIFICATI S.p.A., I-20123 Milano (IT)
(72) Inventor: Mancosu, Federico, Milan (IT); Arabino, Domenico, Salerno (IT)
(74) Representative: Quinterno, Giuseppe

(57) **Abstract**

There is described a weather stripping comprising an anchor portion (2) that can be fastened along a perimetric edge (3a) of an aperture (3) that can be closed by a door (4), and a tubular sealing portion (9) fastened along the anchor portion (2). The sealing portion (9) is elastically deformable, following the closing of the door (4), from an at rest state wherein it has a substantially curved transversal crosssectional contour, to an operating state wherein said transversal cross-sectional contour is elastically deformed by compression. The internal perimetric edge of the transversal cross-sectional contour has three recesses (11, 12, 13) which, together with the connecting area (9a) of the sealing portion (9) on the anchor portion (2), define four hinges, due to the effect of which the sealing portion (9), in passing from the free state to the operating state, behaves like a deformable parallelogram.

## Description

The present invention relates to a weather stripping, particularly for motor vehicle doors, of the type comprising:
- an anchor portion rigidly engageable along a perimetric edge of an aperture that can be closed by a door;
- a tubular sealing portion fastened along the anchor portion and elastically deformable, following the closing of said door, from an undeformed at rest position, wherein it has a substantially curved transversal cross-sectional contour, to an operating state wherein said transversal cross-sectional contour is elastically compressed between the door and the edge of said aperture.

As is known, weather strippings of the type generally used for motor vehicle doors and such like are generally constituted by sections in elastomeric material obtained by means of continuous extrusion.

In the section there are generally defined an anchor portion, having a normally "U"-shaped cross-sectional contour which can be rigidly engaged by means of forced insertion along the perimetric edge of an aperture destined to be closed by the door of the motor vehicle. Along such anchor portion there is fastened a sealing portion having a tubular structure, generally made in foamed elastomeric material, softer than the material constituting the anchor portion.

The sealing portion can be elastically deformed from a free state to an operating state, wherein it is elastically compressed by squeezing following the closing of the door on the perimetric edge of the door aperture.

The geometrical conformation of the sealing portion is of fundamental importance for the purpose of the functional behaviour of the stripping.

In particular, the sealing portion must satisfy contrasting requirements of providing, on the one hand, a sufficient elastic reaction to ensure the hermetic seal with the door closed and of being, on the other hand, easily deformable so as not to need an excessive effort on the part of the user for the purposes of closing.

In addition, the seal in general must be capable of being conformed according to the perimetric extension of the aperture on which it is fitted, including the following of possibly several accentuated curvatures without causing in it wrinkles and/or structural imperfections of different kinds.

Currently, several contrivances have been proposed to satisfy the different contrasting requirements with reference to the functional behaviour of the sealing portion.

The European patent application No. 0 115 750 (SAIAG) describes a stripping whose sealing portion has, in the undeformed at rest state, a cross-sectional contour in the form of a circular crown. Also to avoid wrinkles in the sealing portion at the curvatures imposed on it so as to follow the perimetric extension of the aperture on which it is fitted, it is provided for, in the extrusion stage, that appropriate variations in the thickness be produced along the stripping's longitudinal extension. These areas with a varied thickness can, in the assembly stage of the stripping, be placed at the areas of curvature, so as to confer upon the sealing portion an elastic behaviour suitable for coping with these curvatures without incurring in surface wrinkles and/or structural imperfections of other kinds.

The French patent application No. 2 317 133 (MENSEL) with the object of avoiding structural imperfections of the sealing portion in the areas of curvature, provides for the sealing portion to have longitudinal ribs obtained directly during the extrusion stage in certain sections of the stripping's longitudinal extension. Once assembly has taken place, these longitudinal ribs shall be located in the areas of curvature of the aperture's longitudinal extension.

The US patent No. 4,813,184 (WEIMAR) describes a stripping whose tubular sealing portion, connected with means for sucking in and introducing air, can be deflated to assume a flattened conformation when the door is open, so as to make it easier to subsequently close the door. Once the door is closed, the sealing portion is inflated to exercise a hermetic seal against the closed door. In the inflated condition, the stripping has a transversal cross-sectional contour in the shape of a circular crown. On the internal perimetric edge of such contour there are three recesses which define, on the stripping's longitudinal extension, three continuous grooves, arranged substantially at 120° with respect to the centre of said circular crown. The function of these recesses is that, among other things, under deflated conditions, the stripping shall assume the desired contour with a flattened shape.

According to the invention, it has been found that in order to ensure an optimum hermetic seal even in the presence of manufacturing variations of the space between the body and the door without involving excessive efforts on the part of the user in order to close the door and to confer upon the stripping a degree of adaptability to accentuated curvatures without requiring variations of thickness from one contour to another contiguous one along its longitudinal extension, it is appropriate that the transversal cross-sectional contour of the tubular sealing portion comprise at least three hinges or material outlets with a predetermined relative arrangement. Preferably the tubular portion comprises a swelling of the contour in the portion destined to lie toward the inside of the curve in the section of the tubular portion bent in the door's angle area.

Said arrangement of the material outlets being such that the tubular portion is deformed during the closing of the door with a substantially similar elastic reaction both in the area near the door's hinges following the application of compression and shear forces and in the areas gradually further away up to those where only the compression forces are present.

Said swelling of the thickness being such as to prevent the collapse of the compressed portion following the deformation or deflection of the tubular portion in the area of curvature.

It has also occurred that the mentioned seal, in relation to the elastic deformation from the undeformed free state to the operating state, behaves for most of its extension, like a deformable quadrilateral which provides an elastic deformation increasing in a linear and constant manner with the increase in the deformation imposed upon it.

In practice the arrangement of the material outlets is such that during deformation by compression of the elastomeric material there is never a sudden increase in the rigidity but, rather, thanks to the hinges and to their arrangement, there is a tendency to having an elastic reaction with constant values at least for a section of the tubular portion's compression run.

In particular, the invention relates to a weather stripping, particularly for motor vehicle doors characterized in that the transversal cross-sectional contour of the tubular sealing portion has, in the free state along its entire longitudinal extension:
- a first recess laterally located toward the outside of the aperture and defining a first hinge at which an elastic deflection of the sealing portion takes place in passing from the free state to the operating state;
- a second recess laterally located toward the inside of the aperture, substantially in a position diametrically opposite with respect to the first recess, and defining a second hinge at which an elastic deflection of the sealing portion takes place in passing from the free state to the operating state;
- a third recess asymmetrically staggered toward the inside of said aperture, with reference to the centre of the transversal cross-sectional contour of the sealing portion, and defining a third hinge at which the elastic deflection of the sealing portion takes place in passing from the free state to the operating state.

The first and the second recesses are preferably aligned according to a direction substantially parallel to the plane containing said aperture, while, the second and the third recesses are aligned according to a direction substantially normal to the plane containing the aperture itself.

More in particular the first recess is aligned with the connecting area according to a direction that, with the plane containing said aperture, forms a first angle ranging from 85° to 105°; the second recess is aligned with the connecting area according to a direction that, with the plane containing said aperture, forms a second angle ranging from 145° to 165°; and the third recess is aligned with the connecting area according to a direction that, with the plane containing the aperture, that is, with the plane identifying the contour of the aperture, forms a third angle ranging from 115° to 135°.

The transversal cross-sectional contour of the sealing portion in the free state, is substantially elliptical and inclined at an angle toward the inside of said aperture. The sealing portion is fastened to a connecting appendix extending at an angle from the connecting portion, substantially toward the outside of said aperture, according to a direction forming a connecting angle ranging from 40° to 60° with the plane containing said aperture.

To advantage, the transversal cross-sectional contour of the sealing portion is connected to the anchor portion at a connecting area defining a fourth hinge at which the elastic deflection of the sealing portion itself takes place in passing from the free state to the operating state.

As a consequence, at at least a part of the perimetric extension of said aperture, the cross-sectional contour of said sealing portion, in the operating state, has a substantially quadrangular configuration wherein there have been identified: a facing side acting in abutment on the connecting portion, two supporting sides extending from the opposite extremities of the connecting side, and a contrasting side extending in a direction parallel to the base side between said supporting sides and acting in abutment on said door.

Still according to the present invention, the transversal cross-sectional contour of the sealing portion also has:
- a first reinforcement swelling arranged between the first recess and the connecting area of the sealing portion with the anchor portion;
- a second reinforcement swelling arranged between the second and the third recess;
- a third swelling arranged between the second and the third recess, in a position opposite the second projection.

More in particular, the first swelling is defined by a substantially rectilinear section obtained on the internal perimetric extension of the cross-sectional contour of the sealing portion, said second swelling is defined by a curvilinear section protruding from the internal perimetric edge of said cross-sectional contour, extending along the continuation of said second recess, and said third swelling is defined by two rectilinear sections extending tangentially from the external perimetric edge of said cross-sectional contour, and converging reciprocally to confer upon said swelling a substantially wedge-like configuration.

Further features and advantages shall appear more clearly from the detailed description of a preferred but not exclusive embodiment of a weather stripping, particularly for motor vehicle doors according to the present invention. Such description shall follow hereinfater with reference to the enclosed drawings, provided purely as a non-limiting indication, wherein:
- Fig. 1: shows the transversal cross-sectional contour of the stripping under examination, in the free state;
- Fig. 2: highlights, on the cross-sectional contour of the sealing portion in the free state, the thickness swellings provided for according to the invention as well as the relative positioning of some characteristic parts of said contour;
- Fig. 3: shows the sealing portion of the stripping in the operating state, sectioned along a view taken on the line III-III of Fig. 5;
- Fig. 4: shows a cross-sectional view of the sealing portion in the operating state taken along the line IV-IV of Fig. 5;
- Fig. 5: shows schematically in a side view and purely as an indication, the stripping under examination applied according to the perimetric extension of an aperture of a motor vehicle;
- Fig. 6: is a graph representing indicatively the elastic reaction of the stripping's sealing portion following the elastic deformation imposed upon it in passing from the free state to the operating state.

With reference to the mentioned figures, there is indicated as a whole with 1 a weather stripping, particularly for motor vehicle doors, according to the present invention.

The stripping 1 comprises an anchor portion 2 rigidly engageable along a perimetric edge 3a of an aperture 3, constituted, say, by the access opening of a motor vehicle, that can be closed by a door 4, partially illustrated schematically in Fig.s 3 and 4 which in the example under examination shall be considered to be hinged along a side "A" of the aperture 3.

The anchor portion 2 can have any geometrical configuration, suitable for allowing its fastening to the edge 3a. In the example shown, the anchor portion 2 is constituted substantially by a section extruded in elastomeric material, incorporating a metal reinforcement core 6 of a known type and bent over substantially according to a "U"-shaped configuration. Inside the "U"-shaped conformation there are grasping projections 7 to ensure the rigid engagement of the anchor portion 2 with the perimetric edge 3a of the aperture 3 by means of forced insertion.

There are indicated with 8a and 8b a first and a second appendix, respectively, which protrude from said "U"-shaped section with essentially aesthetic and/or padding functions.

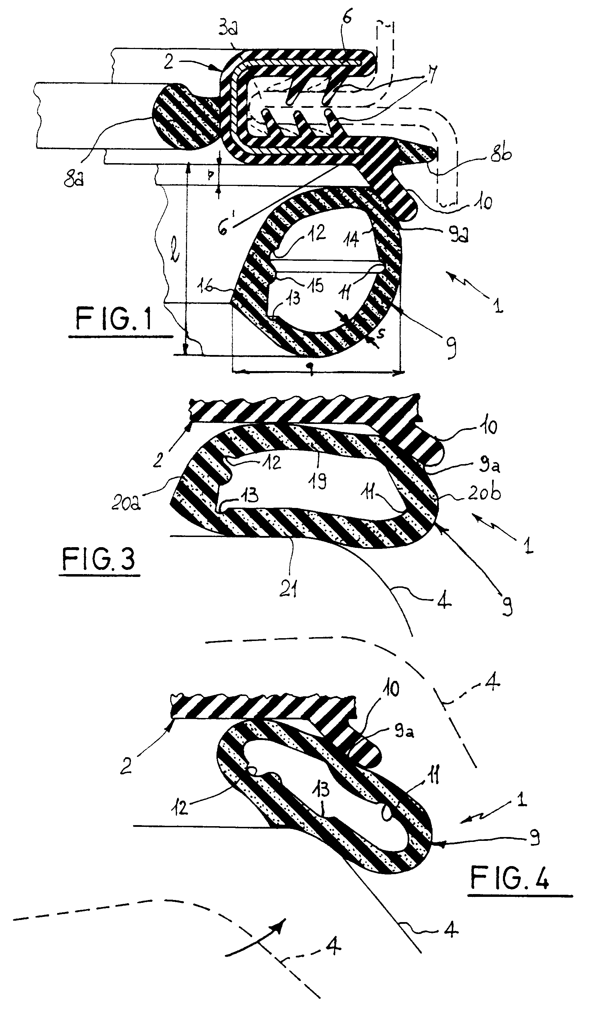

To the anchor plate 2 there is fastened, for example following a continuous coextrusion process executed during the manufacturing stage, a sealing portion, indicated as a whole with 9, having an essentially tubular structure and preferably constituted by foamed elastomeric material, and in any case softer than the material constituting the anchor portion 2. The sealing portion 9 is elastically deformable, following the closing of the door 4, from a free state wherein it has a substantially curved transversal cross-sectional contour (as shown in Fig.s 1 and 2), to an operating state wherein, (as shown in Fig.s 3 and 4), the transversal cross-sectional contour is elastically compressed between the door itself and the perimetric edge 3a of the aperture 3. Preferably the sealing portion 9, in the free state, has a transversal crosssectional contour with an essentially elliptical conformation, with an orientation displaced at an angle toward the inside of the aperture 3, as can be clearly seen from Fig. 1, and is fastened, by means of a connecting area 9a, to a connecting appendix 10 extending at an angle from the anchor portion 2, substantially toward the outside of the aperture 3. In particular, the connecting appendix 10 is oriented according to a direction that forms a connecting angle 10a ranging from 40° to 60°, preferably equal to 50°, with respect to the main plane containing the aperture 3.

According to the present invention, the transversal crosssectional contour of the sealing portion 9 has, in the free state, a first and a second recess 11, 12 aligned according to a direction substantially parallel to the plane containing the aperture 3, as well as a third recess 13 asymmetrically staggered, with reference to the centre of the transversal cross-sectional contour, toward the inside of the aperture 3.

More in particular the third recess 13 is aligned with respect to the second recess 12 according to a direction substantially normal to the plane containing the aperture 3.

The first recess 11 is aligned with the connecting area 9a according to a direction that, with the plane containing the aperture 3, forms a first angle 11a ranging from 85° to 105,° preferably equal to 95°.

The second recess 12 is aligned with the connecting area 9a according to a direction that, with the plane containing the aperture 3, forms a second angle 12a ranging from 145° to 165°, preferably equal to 155°.

The third recess 13, in turn, is aligned with the connecting area 9a according to a direction that, still with reference to the plane containing the aperture 3, a third angle 13a ranging from 115° to 135°, preferably equal to 125°.

As can be seen from Fig. 2, the values of the first, of the second and of the third angle 11a, 12a and 13a have been taken with reference to a median point of the extension of the connecting area 9a on the transversal cross-sectional contour.

The measurements in the case where use is made of a metal reinforcement 6 as in the example described could be taken with reference to the lower extremity 6' of the reinforcement itself, thus assuming angle values deriving from the relative translation with respect to the point that has been considered.

To advantage, the first, second and third recess 11, 12, 13 thanks to the localized weakenings produced by them in the transversal cross-section of the sealing portion 9, define, for the purpose of the functional behaviour of the sealing portion 9, a first, a second and a third hinge, respectively, at which, as can be clearly seen in Fig. 3, there takes place an elastic deflection of the sealing portion 9 in passing from the free state to the operating state. In addition, the connecting area 9a of the sealing portion 9 on the connecting appendix 10 define substantially a fourth hinge, at which there takes place the elastic deflection of the sealing portion itself in passing from the free state to the operating state.

There is preferably provided for that the distance between the connecting area 9a and the first recess 11, that is, the distance between the fourth and the first hinge, be substantially equal to the distance between the second and the third recess 12, 13, that is, between the second and the third hinge.

Thus, the sealing portion 9, when subjected to the radial thrust exerted by the door 4 on the section between the first and the third hinge 11, 13, behaves like an elastically deformable articulated parallelogram.

Preferably, the recesses 11, 12, 13 are obtained on the internal perimetric edge of the contour of the sealing portion 9, but strippings can be obtained wherein one or more hinges are along the external extension.

Still according to the present invention, the transversal cross-sectional contour of the sealing portion 9 also has a first, a second and a third reinforcement swelling, indicated with 14, 15, 16, respectively, whose presence compensates for the weakening produced by the recesses 11, 12, 13 with reference to the resistance of the sealing portion.

In particular, the presence of the reinforcement swellings 15, 16, is designed so that the neutral axis of the tubular portion, shown by the dotted line T-T in Fig. 2, moves in the direction of the arrows F-F with the result that in the section wherein the tubular portion is bent in the angle area of the door, the area of the fibres subjected to traction stresses is increased and the area of the fibres subjected to compression is decreased.

These latter compressed fibres being arranged in an area with a swelling of the thickness offer a good resistance and there is no collapse of the tubular portion.

In other words the stripping is made in such a way as to prevent the stripping, having originally a rectilinear longitudinal extension, when it is fastened along the extension of the perimetric edge 3a of the aperture 3, from suffering from undesired wrinkles on the sealing portion 9, in the areas of curvature of the perimetric edge itself.

As highlighted in Fig. 2, the reinforcement swellings 14, 15, 16 are defined by respective deviations of the internal "i" and external "e" perimetric edges of the contour of the sealing portion 9, with respect to substantially elliptical imaginary lines "i'" and "e'", represented by dotted lines in Fig. 2.

In particular the first reinforcement swelling 14 is arranged between the first recess 11 and the connecting area 9a and is substantially defined by a rectilinear section of the internal perimetric edge "i" of the transversal cross-sectional contour of the sealing portion 9. The second reinforcement swelling 15, arranged between the second and the third recess 12, 13, is substantially defined by a curvilinear section protruding from the internal perimetric edge "i" of the mentioned cross-sectional contour and extending along the continuation of the second recess, substantially according to a wave-like shape.

The third reinforcement swelling 16 is also arranged between the second and the third recess 12, 13, in a position opposite the second swelling 15. In particular, the third swelling 16 is defined by two rectilinear sections 16a, 16b extending tangentially from the external perimetric edge of the transversal cross-sectional contour of the sealing portion 9. These sections 16a, 16b, converge reciprocally so as to confer upon the third swelling 16 a substantially wedge-like configuration with the vertex 16c facing toward the inside of the aperture 3.

It is provided for that the vertex 16c of the third reinforcement swelling 16 be aligned with the connecting area 9a of the sealing portion 9 according to a direction that, with reference to the plane containing the aperture 3, forms a fourth angle 17 having a value ranging from 138° to 157°, preferably equal to 148°.

In addition, the second reinforcement swelling 15 is preferably aligned with the connecting area 9a according to a direction that, with reference to the plane of the aperture 3, forms a fifth angle 18 ranging from 135° to 165°, preferably equal to 150°.

It is also provided for that the cross-sectional swellings that have been described as circumscribed by rectilinear sections could be circumscribed by curvilinear sections.

As an example it is also pointed out that the tubular portion of the stripping illustrated in Fig. 1 can have the following dimensions:
- distance of the upper surface of the bulb from the anchor part 1 = 9.2 mm;
- distance of the lower surface of the bulb from the anchor part d = 2.3 mm;
- width of the overhang q = 17.4 mm;
- thickness with no swellings s = 2.3 mm.

The elastomeric material of the anchor part has a hardness of some 70 shore A and the tubular sealing portion in foamed cellulose rubber, otherwise known as sponge rubber, has a density ranging from 0.4 to 0.7 gr/dm³, preferably from 0.5 to 0.67 gr/dm³.

After what has been said above in a prevalently structural sense the stripping under examination is described with reference to its functional behaviour.

As previously mentioned, the stripping 1 is fastened by forced insertion of the anchor portion on the perimetric edge 3a of the aperture 3.

To advantage, the structural stiffening conferred upon the sealing portion 9 by the reinforcement swellings 15, 16 eliminates the risk that undesired wrinkles are formed on the sealing portion itself, due to the curvature imposed upon it in order to follow the perimetric extension of the aperture 3.

When the door 4 is closed on the aperture 3, the sealing portion 9 is substantially compressed between the door itself and the perimetric edge 3a, passing from the free state to the operating state.

To advantage, the presence of the recesses 11, 12, 13, together with the connecting area 9a, confers upon the sealing portion 9 a behaviour similar to that of a parallelogram articulated for the purposes of elastical deformation. Thus, when the sealing portion 9 is in the operating state its transversal cross-sectional contour is substantially conformed according to a quadrilateral, as clearly visible from Fig. 3.

With reference to such figure, the quadrilateral defined by the transversal cross-sectional contour of the sealing portion 9 has a facing side 19 acting against the anchor portion 2, at whose opposite extremities there are connected, in substantially parallel directions, two supporting sides 20a, 20b between which there extends a contrasting side 21, substantially parallel to the facing side 19 and acting in abutment on the door 4.

To advantage, the reinforcement swellings 14, 15, 16 cause the supporting sides 20a, 20b to behave, in essence, like two struts which prop up the contrasting side 20, the latter having, in relation to the radial thrusts exerted by the door 4, an elastic behaviour similar to that of a flexible bow.

This arrangement ensures that the sealing portion 9 opposes, against the elastic deformation imposed upon it by the closing of the door 4, a reaction that gradually increases in a linear and constant manner, with the increase in the amount of the deformation itself.

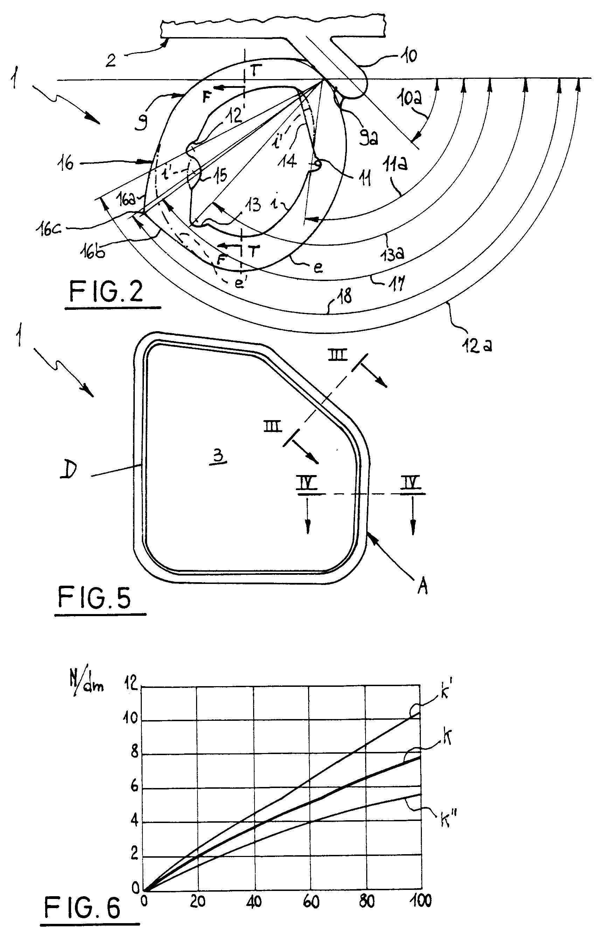

This situation is indicatively represented by the curves of Fig. 6 which, along the x-axis, gives the deformation values imposed upon the sealing portion 9, expressed in percentage of the total run from the initial compression to the closing of the door and, along the y-axis, the values of the reactions opposed by it to the deformation, expressed in N/dm (Newtons/decimeter). In that graph, the curves K represents the ideal behaviour of the sealing portion 9, while the curves K' and K'' identify the curves corresponding to a contour with minimum and maximum variations of the stripping's manufacturing tolerances and of the variations of mechanical processing that can be had in the space identified between the body and the door closed on the body.

It should be highlighted in particular that the arrangement and the number of the hinges according to the invention is such that the values of the tube's rigidity taken in N/dm for 100% of the compression run range for the example of Fig. 6 substantially for all points of the stripping, from 11 to 5.5.

In general, in the accomplishments which derive from an arrangement of the hinges as described, the total reactions that the user applies to the door can range in an interval of values from 20 to 45 kg and preferably from 25 to 35 kg.

For example, the value of static reaction measured with the door closed for the stripping identified in Fig. 6 by the curve K with an extension of 3.5 m is equal to 24 kg and that of the stripping identified by the curve K' is 42 kg.

The result has been obtained by keeping unchanged the stripping's contour along its entire extension.

In some cases the known strippings could cause reactions of less than 45 kg but, on the whole, they are close to that result with variations in the transversal cross-section along the longitudinal extension, that is, with recourse to the type of stripping having a variable contour.

As it can easily be understood such result is attained with the adoption of manufacturing processes that are highly complicated and expensive and moreover such strippings require a longer time for their assembly since for each portion of the body there is a special transversal cross-section of the contour to be fitted.

It should be noted that the elastic deformation of the sealing portion 9 according to the illustration in Fig. 3 takes place in a manner substantially similar for all transversal cross-sections starting from the cross-section BB toward D in Fig. 5.

But the deformation of Fig. 3 does not necessarily take place along the entire perimetric extension of the edge 3a of the aperture 3 and it can also be provided for that in a short section of the entire extension and exactly along the side "A" of the aperture 3 on which the door 4 is hinged, the sealing portion 9 assumes in the operating state the configuration illustrated in Fig. 4.

This different configuration is due to the fact that, along the side "A", the approach of the corresponding edge of the door to the perimetric edge of the aperture can take place according to a direction at an angle with respect to the plane in which the aperture 3 lies, according to the direction of the arrow with compression and shear forces, as opposed to what takes place on the remaining part of the perimetric edge 3a, where the approach of the door 4 while closing takes place according to a direction substantially normal to the mentioned lying plane, thus in practice with compression stresses only.

As can be seen, even in the operating condition of Fig. 4 the sealing portion 9 adheres perfectly to the door 4, guaranteeing a perfect hermetic seal.

The functional behaviour of the stripping under examination guarantees a perfect hermetic seal on the door, even in the presence of wide tolerances of the stripping itself.

Thus, with the adoption of the stripping under examination, it is possible to accept wide tolerances for the assembly of the door on the aperture, without jeopardizing the hermetic seal.

In addition, the elastic reaction that increases linearly with the increase of the deformation, causes the effort made by the user, even when it becomes necessary to impart large deformations to the sealing portion in order to close the door, not be too high.

This aspect is clearly advantageous with respect to known strippings, whose sealing portion had a contour with a substantially constant thickness. In fact, due to the progressive compression imposed upon the elastomeric material constituting the sealing portion the known strippings had an elastic reaction curve with a slope that grows in a substantially parabolic manner.

In addition, the presence of reinforcement swellings allows the elimination of the dangers of wrinkle in the areas of curvature of the perimetric edge of the aperture 3, without it being necessary to modify the thicknesses of the sealing portion along the longitudinal extension. In other words, the stripping under examination may be obtained simply by manufacturing an extruded section having a uniform thickness along the longitudinal extension.

This ensures a substantial reduction in manufacturing costs with respect to the known strippings, for the production of which it was necessary to associate with the extrusion matrices devices that were selectively operatable in order to partialize the flow of the elastomeric material out of the extrusion matrix, so as to obtain variations of thickness suitably located along the stripping.

Naturally numerous changes and variants may be made to the invention thus conceived, all falling within the scope of the inventive concept which characterizes it; for example, the stripping could comprise an anchor part without a reinforcement lamina and be made of rubber with a hardness such as to ensure a sufficient grip with the body.

In addition, with the contour of the door there could be associated several separate shorter pieces of stripping each of which comprises a contour having a cross-section that is constant as explained along its entire longitudinal extension or a plurality of strippings separated one from the other at least one of which along its entire longitudinal extension has an unchanged transversal cross-section as has been described and illustrated.

## Claims

1. Weather stripping, particularly for motor vehicle doors, comprising:
- an anchor portion (2) rigidly engageable along a perimetric edge (3a) of an aperture (3) that can be closed by a door (4);
- a tubular sealing portion (9) fastened along the anchor portion (2) and elastically deformable, following the closing of said door (4), from a free state, wherein it has a substantially curved transversal cross-sectional contour, to an operating state wherein said transversal cross-sectional contour is elastically compressed between the door (4) and the edge (3a) of said aperture (3),
characterized in that the transveral cross-sectional contour of the sealing portion (9) has, in the free state along the entire longitudinal extension:
a) a first recess (11) laterally located toward the outside of the aperture (3) and defining a first hinge at which an elastic deflection of the sealing portion (9) takes place in passing from the free state to the operating state;
b) a second recess (12) laterally located toward the inside of said aperture (3), substantially in a position diametrically opposite with respect to the first recess (11) and defining a second hinge at which an elastic deflection of the sealing portion (9) takes place in passing from the free state to the operating state;
c) a third recess (13) asymmetrically staggered toward the inside of said aperture (3) with reference to the centre of the transversal cross-sectional contour of the sealing portion (9), and defining a third hinge at which the elastic deflection of the sealing portion (9) takes place in passing from the free state to the operating state.

2. Stripping according to claim 1, characterized in that the transversal cross-sectional contour of the sealing portion (9) is connected to the anchor portion (2) at a connecting area (9a) defining a fourth hinge at which the elastic deflection of the sealing portion itself takes place in passing from the free state to the operating state.

3. Stripping according to claim 4, characterized in that said connecting area (9a) and said first recess (11) are spaced one from the other according to a measure substantially equal to the distance between the second (12) and the third recess (13).

4. Stripping according to claim 2, characterized in that at at least a part of the perimetric extension of said aperture, the cross-sectional contour of said sealing portion (9), in the operating state, has a substantially quadrangular configuration wherein there have been identified a facing side (19) acting in abutment on the connecting portion (2), two supporting sides (20a, 20b) extending from the opposite extremities of the facing side (19), and a contrasting side (21) extending in a direction parallel to the facing side (19) between said supporting sides (20a, 20b) and acting in abutment on said door (4).

5. Stripping according to claim 1, characterized in that said first (11) and second recess (12) are aligned according to a direction substantially parallel to the plane containing said aperture (3).

6. Stripping according to claim 1, characterized in that said second (12) and third recess (13) are aligned according to a direction substantially normal to the plane containing said aperture (3).

7. Stripping according to claim 1, characterized in that said recesses (11, 12, 13) are obtained on an internal perimetric edge (i) of the contour of the sealing portion (9).

8. Stripping according to claim 2, characterized in that the transversal cross-sectional contour of the sealing portion (9) also has:
- a first reinforcement swelling (14) arranged between the first recess (11) and the connecting area (9a) of the sealing portion (9) with the anchor portion (2);
- a second reinforcement swelling (15) arranged between the second and the third recess (12, 13);
- a third reinforcement swelling (16) arranged between the second and the third recess (12, 13), in a position opposite with respect the second reinforcement swelling (15).

9. Stripping according to claim 8, characterized in that:
- said first swelling (14) is defined by a rectilinear section obtained on the internal perimetric extension (i) of the cross-sectional contour of the sealing portion (9);
- said second swelling (15) is defined by a curvilinear section protruding from the internal perimetric edge (i) of said cross-sectional contour, extending along the continuation of said second recess (12);
- said third swelling (16) is defined by two rectilinear sections (16a, 16b) extending tangentially from the external perimetric edge (e) of said cross-sectional contour, and converging reciprocally to confer upon said third swelling (16) a substantially wedge-like configuration.

10. Stripping according to claim 1, characterized in that the transversal cross-sectional contour of the sealing portion (9) in the free state, is substantially elliptical with an orientation at an angle toward the inside of said aperture (3).

11. Stripping according to claim 1, characterized in that said sealing portion (9) is fastened to a connecting appendix (10) extending at an angle from the anchor portion (2), substantially toward the outside of said aperture (3).

12. Stripping according to claim 1, characterized in that: said first recess (11) is aligned with said connecting area (9a) according to a direction that, with the plane containing said aperture (3), forms a first angle (11a) ranging from 85° to 105°;
- said second recess (12) is aligned with the connecting area (9a) according to a direction that, with the plane containing said aperture (3), forms a second angle (12a) ranging from 145° to 165°; and
- said third recess (13) is aligned with the connecting area (9a) according to a direction that, with the plane containing the aperture (3), forms a third angle (13a) ranging from 115° to 135°.

13. Stripping according to claim 8, characterized in that said third reinforcement swelling (16) is aligned with the connecting area (9a) according to a direction that, with respect to the plane containing the aperture (3), forms a fourth angle (17) ranging from 138° to 157°.

14. Stripping according to claim 8, characterized in that said second reinforcement swelling (15) is aligned with the connecting area (9a) according to a direction that, with respect to the plane containing said aperture (3), forms a fifth angle (18) ranging from 135° to 165°.

15. Stripping according to claim 11, characterized in that said connecting appendix (10) is oriented according to a direction forming a connecting angle (10a) ranging from 40° to 60° with the plane containing said aperture (3).
